# FASCICULE DE BREVET EUROPEEN

(11) **EP 1 632 391 B1**
(45) Date de publication et mention de la délivrance du brevet: **24.11.2010**
(21) Numéro de dépôt: 05291695.4
(22) Date de dépôt: 08.08.2005
(51) Int. Cl.: B60N 2/04

(54) **Siège pour un véhicule automobile et notamment siège arrière**
Kraftfahrzeugsitz insbesondere ein Hintersitz
Automotive vehicle seat particularly a rear seat

(30) Priorité: 06.09.2004 FR 0409413
(43) Date de publication de la demande: 08.03.2006
(73) Titulaire: Peugeot Citroën Automobiles SA, 78140 Vélizy-Villacoublay (FR)
(72) Inventeur: Levitre, Gilles, 92230 Gennevilliers (FR)

(56) Documents cités:
- DE-A1- 1 480 508
- DE-A1- 1 580 609
- DE-A1- 2 947 813
- FR-A- 1 452 002
- FR-A- 2 063 529
- FR-A- 2 200 803
- GB-A- 944 693
- GB-A- 1 078 950
- GB-A- 1 177 789
- US-A- 3 368 840
- US-A- 3 583 665
- US-A- 3 635 524

## Description

La présente invention concerne un siège de véhicule automobile et plus particulièrement un siège arrière.

Les véhicules automobiles par exemple du type monospace ou break sont maintenant équipés, derrière la rangée de sièges avant, de sièges arrière qui sont modulables de façon à adapter l'habitabilité du véhicule en fonction du nombre de passagers et/ou des charges à transporter.

Pour cela, on connaît des sièges démontables qui peuvent être enlevés pour agrandir le volume de chargement. Le principal inconvénient de cette solution réside dans la nécessité du démontage.

En effet, il faut libérer les différents sièges de leur ancrage sur le plancher du véhicule et ranger les sièges démontés, en dehors du véhicule, dans des locaux. Lorsque l'on a besoin d'une place pour un passager supplémentaire, il faut de nouveau rechercher le siège et procéder à son remontage. Ainsi, l'adaptation de l'espace interne du véhicule en fonction de son utilisation nécessite un temps de préparation et des efforts importants. De plus, en milieu urbain, le possesseur d'un tel véhicule ne dispose pas toujours d'un local permettant le stockage des sièges enlevés.

On connaît aussi des sièges qui sont conçus pour pouvoir basculer l'assise derrière la rangée de sièges située devant et rabattre le dossier de façon à augmenter le volume de chargement. Mais, ce type de siège ne permet pas d'obtenir un plancher de chargement continu et plat.

On connaît également des sièges escamotables qui sont conçus pour pouvoir basculer l'assise dans un logement ménagé au-dessous du plancher du véhicule et rabattre le dossier au-dessus de ladite assise pour fermer le logement et déterminer un plancher de chargement continu et plat, tel que par exemple le brevet FR1452002 qui montre les caractéristiques du préambule de la revendication 1, et qui décrit un siège dont l'assise et le dossier sont escamotables. A cet effet, le basculement du dossier vers l'avant provoque le pivotement de bielles, articulées sur le plancher et l'assise vers l'avant dans le logement ménagé pour les pieds de l'utilisateur, tandis que le dossier vient recouvrir l'assise. Le dossier et l'assise ayant été déplacés vers l'avant, une plaque de fermeture articulée sur le bord du logement à l'arrière du siège et en appui sur le dossier vient combler l'espace résiduel afin de fournir un plancher plat.

D'une manière générale, les solutions utilisées jusqu'à présent pour basculer un siège entre une position d'utilisation et une position escamotée demandent un effort important du fait que, le plus souvent, la partie arrière de la garniture de l'assise est encastrée au-dessous de la garniture du dossier si bien que la partie inférieure de ce dossier constitue un point qu'il faut franchir pour rabattre l'assise.

L'invention a pour but d'éviter ces inconvénients en proposant un siège de véhicule automobile escamotable dans le plancher du véhicule par des manoeuvres simples et sans effort important de façon à pouvoir moduler le nombre de places en fonction des passagers ainsi que le volume de chargement selon les charges à transporter.

L'invention a donc pour objet un siège de véhicule automobile et plus particulièrement un siège arrière, du type comprenant un dossier et une assise montés déplaçables simultanément par des moyens de basculement sur le plancher du véhicule entre une position d'utilisation et une position escamotée et formés chacun par une armature rigide et un garnissage, caractérisé en ce que les moyens de basculement comprennent :
- à l'avant de l'armature de l'assise, un premier axe de rotation perpendiculaire à la direction longitudinale du véhicule et articulé sur une extrémité d'au moins une bielle dont l'autre extrémité est articulée sur le plancher,
- à l'arrière de l'armature de l'assise et à la partie supérieure de cette assise, un deuxième axe de rotation perpendiculaire à la direction longitudinale du véhicule et articulé sur l'armature du dossier, et
- à la partie inférieure de l'armature du dossier et au-dessous de ladite assise, un troisième axe de rotation perpendiculaire à la direction longitudinale du véhicule et déplaçable longitudinalement, vers l'arrière dans au moins une glissière de façon que l'assise descende vers le plancher en pivotant autour des axes de rotation et que les biellettes pivotent autour de leur extrémité articulée sur le dit le plancher dudit véhicule automobile, dans la position escamotée, l'assise est placée horizontalement dans le logement ménagé au-dessous du plancher et le dit dossier étant placé horizontalement au-dessus de ladite assise pour former une partie dudit plancher

Selon d'autres caractéristiques de l'invention :
- le siège comporte des moyens de verrouillage de l'armature du dossier dans la position d'utilisation de l'assise et du dossier,
- l'armature de l'assise comporte, à sa partie avant, une butée contre ladite biellette et, à sa partie arrière, une butée contre l'armature du dossier dans la position d'utilisation de l'assise du dossier,
- le premier axe de rotation et les butées sont formés chacun par une tige horizontale s'étendant entre deux flasques parallèles à la direction longitudinale du véhicule et formant l'armature de ladite assise,
- les moyens de verrouillage sont formés par au moins un loquet monté pivotant sur ladite glissière entre une position active de blocage du troisième axe de rotation et une position escamotée de libération de ce troisième axe,
- le loquet est équipé d'un organe élastique de rappel dudit loquet en position active,
- l'extrémité de la biellette articulée sur le plancher est équipée d'un organe élastique de rappel de cette biellette en position d'utilisation de l'assise et du dossier.

D'autres caractéristiques et avantages de l'invention apparaîtront au cours de la description qui va suivre, donnée à titre d'exemple et faite en se référant aux dessins annexés, sur lesquels :
- la Fig. 1 est une vue schématique en perspective d'un siège conforme à l'invention,
- la Fig. 2 est une vue schématique de côté du siège conforme à l'invention,
- la Fig. 3 est une vue schématique des moyens de verrouillage du siège dans sa position d'utilisation,
- les Figs. 4 et 5 sont des vues schématiques de côté du siège selon l'invention montrant la cinématique de basculement de ce siège.

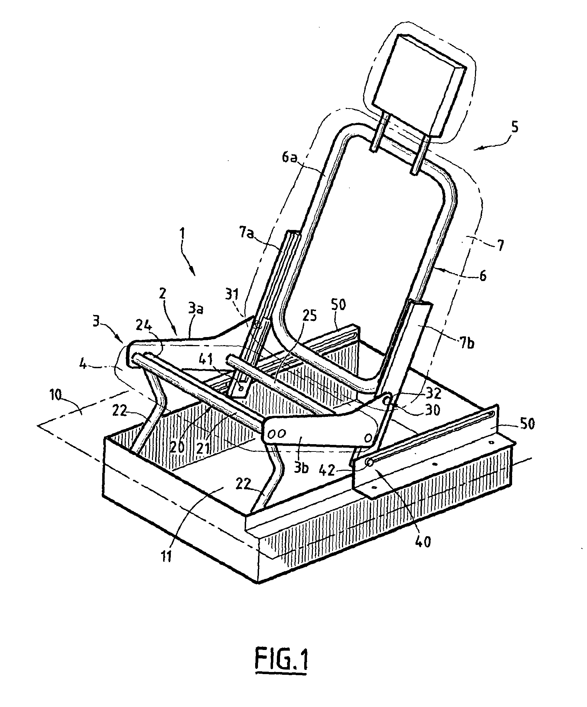

Sur la Fig. 1, on a représenté schématiquement un siège d'un véhicule automobile, notamment un siège arrière désigné dans son ensemble par la référence 1. De manière classique, ce siège 1 se compose d'une assise 2 et d'un dossier 5.

L'assise 2 se compose d'une armature rigide 3 et d'une garniture 4 enrobant ladite armature rigide 3 et, de même, le dossier 5 se compose d'une armature rigide 6 et d'une garniture 7 enrobant ladite armature rigide 6.

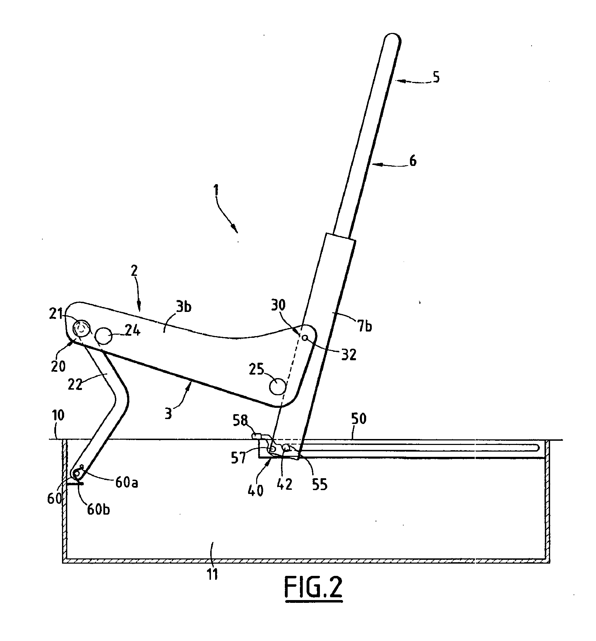

Sur les Figs. 2 à 5, uniquement les armatures 3 et 6 respectivement de l'assise 2 et du dossier 5 ont été représentées afin de faciliter la compréhension.

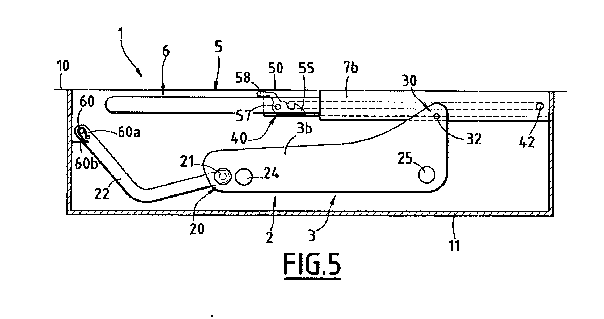

D'une manière générale, l'assise 2 et le dossier 5 du siège 1 sont montés déplaçables simultanément par des moyens de basculement sur le plancher 10 du véhicule entre une position d'utilisation représentée notamment sur les Figs. 1 et 2 et une position escamotée représentée à la Fig. 5 dans laquelle l'assise 2 est placée horizontalement dans un logement 11 ménagé au-dessous du plancher 10 et le dossier 5 est placé horizontalement au-dessus de ladite assise 2 pour former une partie dudit plancher 10.

Ainsi que montré plus particulièrement à la Fig. 1, l'armature 3 de l'assise 2 est constituée, entre autres, de deux flasques parallèles, respectivement 3a et 3b, et s'étendant parallèlement à la direction longitudinale du véhicule.

L'armature 6 du dossier 5 est constituée d'un cadre 6a relié à deux montants parallèles, respectivement 7a et 7b. Ces montants 7a et 7b assurent la liaison, d'une part, entre l'armature 6 du dossier 5 et l'armature 3 de l'assise 2 et, d'autre part, entre cette armature 6 et le plancher 10 du véhicule automobile.

Les moyens de basculement simultanés de l'assise 2 et du dossier 5 entre la position d'utilisation et la position escamotée comprennent trois axes de rotation, respectivement 20, 30 et 40, s'étendant parallèlement les uns par rapport aux autres et perpendiculairement à la direction longitudinale du véhicule automobile.

Le premier axe de rotation 20 est constitué par une tige 21 s'étendant entre les deux flasques 3a et 3b et articulée sur ceux-ci. Cette tige 21 est solidaire d'une extrémité d'au moins une biellette 22 dont l'autre extrémité est montée articulée sur le plancher 10 du véhicule automobile.

De préférence et selon le mode de réalisation représenté sur les figures, l'axe de rotation 20 est constitué par la tige 21 solidaire de deux biellettes 22 s'étendant parallèlement l'une par rapport à l'autre et articulées chacune à l'extrémité avant d'un des flasques 3a et 3b de l'armature 3 de l'assise 2.

La solidarisation des biellettes 22 et de la tige 21 articulée sur les flasques 3a et 3b permet de bien guider le siège lors de son basculement en position escamotée dans le plancher 10 et d'éviter aussi à ce siège de se vriller ou de se coincer.

L'extrémité de chaque biellette 22 opposée à celle articulée à l'axe de rotation 21 est montée articulée sur le plancher 10 du véhicule automobile.

Le deuxième axe de rotation 30 est disposé à l'arrière de l'armature 3 de l'assise 2 et à la partie supérieure de cette assise 2. Cet axe de rotation 30 s'étend perpendiculairement à la direction longitudinale du véhicule et est constitué, d'une part, par un pion 31 monté articulé entre le flasque 3a de l'armature 3 et le montant 7a de l'armature 7 et, d'autre part, par un pion 32 monté articulé entre le flasque 3b de cette armature 3 de l'assise 2 et le montant 7b de l'armature 6 du dossier 5. Les pions 31 et 32 sont disposés sur le même axe horizontal.

Enfin, le troisième axe de rotation 40 est disposé à la partie inférieure de l'armature 6 du dossier 5 et s'étend perpendiculairement à la direction longitudinale du véhicule automobile. L'axe de rotation 40 est déplaçable longitudinalement dans au moins une glissière 50 disposée sur le plancher 10 du véhicule automobile.

De préférence et comme représenté notamment à la Fig. 1, l'axe de rotation 40 est constitué, d'une part, d'un pion 41 disposé à l'extrémité inférieure du montant 7a et qui est déplaçable longitudinalement dans une glissière 50 et, d'autre part, par un pion 42 disposé à l'extrémité inférieure du montant 7b et qui est également déplaçable dans une glissière 50, lesdites glissières 50 étant parallèles l'une par rapport à l'autre et s'étendant parallèlement à la direction longitudinale du véhicule automobile.

L'armature 3 de l'assise 2 comporte, à sa partie avant, une butée 24 contre les biellettes 22 dans la position d'utilisation de l'assise 2 et du dossier 5 et qui est constituée par une tige s'étendant transversalement entre les flasques 3a et 3b de ladite armature 3 de l'assise 2. L'armature 3 de cette assise 2 comporte aussi, à sa partie arrière, une butée 25 contre les montants 7a et 7b de l'armature 6 du dossier dans la position d'utilisation de l'assise 2 et du dossier 5 dudit siège 1. Cette butée 25 est constituée par une tige s'étendant transversalement entre les flasques 3a et 3b de l'armature 3 de l'assise 2 et qui est disposée au-dessous du deuxième axe de rotation 30.

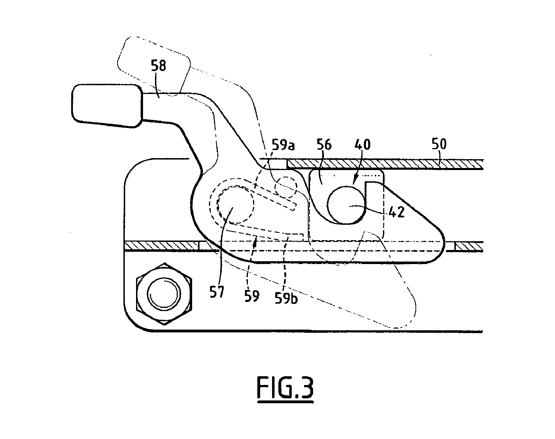

Enfin, le siège 1 comporte des moyens de verrouillage dans la position d'utilisation de ce siège et qui sont représentés notamment à la Fig. 3.

Comme montré sur cette figure, les moyens de verrouillage sont constitués par un loquet 55 monté articulé sur une des glissières 50 et qui comporte une encoche 56 destinée à coopérer avec le pion 41 ou 42 correspondant à la glissière et par exemple avec le pion 42.

Le loquet 55 est monté articulé sur la glissière 50 au moyen d'un axe de pivotement 57 et est équipé d'un levier de commande 58 permettant de déplacer ledit loquet 55 entre une position active de blocage du pion 42 du troisième axe de rotation 40 et une position escamotée de libération de ce pion 42.

Le loquet 55 est également muni d'un organe élastique de rappel du loquet 55 en position active. Cet organe élastique est constitué par exemple par un système à ressort 59 disposé autour de l'axe 57 et qui comporte, de manière classique, une première extrémité 59a solidaire du loquet 55 et une seconde extrémité 59b solidaire de la glissière 50.

De même, l'extrémité d'au moins une biellette 22 articulée sur le plancher 10 est pourvue d'un organe élastique 60 de rappel de cette bielle 22 en position d'utilisation de l'assise 2 et du dossier 5.

Ainsi que montré à la Fig. 2, cet organe de rappel est constitué par un système à ressort 60 disposé autour de l'axe de l'extrémité correspondante de la biellette 22 et qui comporte une première extrémité 60a fixée sur cette biellette 22 et une seconde extrémité 60b fixée sur le plancher 10.

Le basculement du siège 1 entre la position d'utilisation Figs. 1 et 2 et la position escamotée représentée sur la Fig.5 est réalisée de la façon suivante.

Tout d'abord, l'utilisateur soulève le levier 58 ce qui a pour effet de faire basculer le loquet 55 de façon à dégager le pion 42 de l'axe de rotation 40 de l'encoche 56 de ce loquet 55.

Ensuite, l'utilisateur bascule vers l'avant du véhicule automobile le dossier 5 qui dans un premier temps permet aux pions 41 et 42 de coulisser vers l'arrière des glissières 50 de telle manière que l'assise 2 descende vers le plancher 10 en pivotant autour des axes de rotation 20 et 30 et que les biellettes 22 pivotent autour de leur extrémité articulée sur ledit plancher 10.

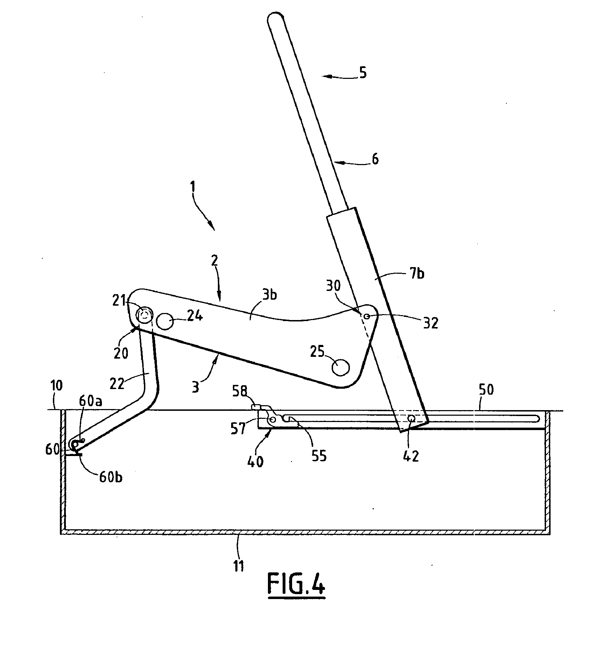

Comme le montre la Fig. 4, c'est simultanément au cours de ce mouvement que le dossier 5 pivote autour des pions 31 et 32 de l'axe de rotation 30 et également autour des poins 41 et 42 de l'axe de rotation 40. Ces pions 41 et 42 coulissent dans les glissières 50 sur toute leur longueur vers l'arrière du véhicule automobile.

Le siège 1 pivote donc progressivement dans la position escamotée représentée à la Fig. 5 dans laquelle l'assise 2 est placée dans le logement 11 ménagé dans le plancher 10 et le dossier 5 obture ce logement 11 en formant une surface continue avec ledit plancher 10.

Pour ramener le siège 1 dans la position d'utilisation, il suffit à l'utilisateur de basculer le dossier 5 vers l'arrière du véhicule automobile de telle manière que les pions 41 et 42 de l'axe de rotation 40 coulissent dans les glissières 50 vers l'avant de ce véhicule et progressivement l'assise 2 revient en position d'utilisation. Au cours de ce mouvement, le pion 42 bascule le loquet 55 vers le bas et vient se loger dans l'encoche 56 de ce loquet 55 qui est ramené en position de verrouillage par l'organe élastique 59. En position d'utilisation, la butée 24 est en appui sur les biellettes 22 et la butée 25 est en appui sur les montants 5a et 7b du cadre 6a du dossier 5. Au cours du basculement du dossier 5 de la position escamotée vers la position d'utilisation, l'organe de rappel 60 entraîne automatiquement le siège dans sa position d'utilisation sans que le dossier 5 ne gêne le relevage quasi automatique de l'assise 2.

Le système de basculement du siège selon l'invention présente l'avantage de ne demander qu'un effort de manoeuvre très faible et le dossier ne gêne en rien le basculement de cette assise.

Le siège selon l'invention offre la possibilité de pouvoir disposer d'un plancher de chargement plat et de grande surface, tout en protégeant les garnitures de l'assise et du dossier dans la position escamotée de ce siège. Il permet également, en effectuant des manoeuvres simples, de moduler le nombre de places en fonction des passagers, ainsi que le volume de chargement selon les charges à transporter.

## Revendications

1. Siège de véhicule automobile et plus particulièrement siège arrière, du type comprenant une assise (2) et un dossier (5) montés déplaçables simultanément par des moyens de basculement sur le plancher (10) du véhicule entre une position d'utilisation et une position escamotée et formés chacun par une armature rigide (3 ; 6) et un garnissage (4 ; 7), les moyens de basculement comprenant :
- à l'avant de l'armature (3) de l'assise (2), un premier axe de rotation (20) perpendiculaire à la direction longitudinale du véhicule et articulé sur une extrémité d'au moins une biellette (22) dont l'autre extrémité est articulée sur le plancher (10),
- à l'arrière de l'armature (3) de l'assise (2) et à la partie supérieure de cette assise (2), un deuxième axe de rotation (30) perpendiculaire à la direction longitudinale du véhicule et articulé sur l'armature (6) du dossier (5),
**caractérisé en ce que** les moyens de basculement comprennent aussi
à la partie inférieure de l'armature (6) du dossier (5) et au-dessous de ladite assise (2), un troisième axe de rotation (40) perpendiculaire à la direction longitudinale du véhicule et déplaçable longitudinalement vers l'arrière dans au moins une glissière (50) de façon que l'assise (2) descende vers le plancher (10) en pivotant autour des axes de rotation (20) (30) et que les biellettes (22) pivotent autour de leur extrémité articulée sur le dit plancher (10) dudit véhicule automobile, dans la position escamotée, l'assise (2) est placée horizontalement dans le logement (11) ménagé au-dessous du plancher (10) et le dit dossier (5) étant placé horizontalement au-dessus de ladite assise (2) pour former une partie dudit plancher (10).

2. Siège selon la revendication 1, **caractérisé en ce qu'**il comporte des moyens (55, 58) de verrouillage de l'armature (6) du dossier (5) dans la position d'utilisation de l'assise (2) et du dossier (5).

3. Siège selon l'une quelconque des revendications 1 à 2, **caractérisé en ce que** l'armature (3) de l'assise (2) comporte, à sa partie avant, une butée (24) contre ladite biellette (22) et, à sa partie arrière, une butée (25) contre l'armature (6) du dossier (5) dans la position d'utilisation de l'assise (2) et du dossier (5).

4. Siège selon l'une quelconque des revendications 1 à 3, **caractérisé en ce que** le premier axe de rotation (20) et les butées (24, 25) sont formés chacun par une tige horizontale s'étendant transversalement entre deux flasques (3a, 3b) parallèles à la direction longitudinale du véhicule et formant l'armature (3) de ladite assise (2).

5. Siège selon la revendication 2, **caractérisé en ce que** les moyens de verrouillage sont formés par au moins un loquet (55, 58) monté pivotant sur ladite glissière (50) entre une position active de blocage du troisième axe de rotation (40) et une position escamotée de libération de ce troisième axe de rotation (40).

6. Siège selon la revendication 5, **caractérisé en ce que** le loquet (55, 58) est équipé d'un organe élastique (59) de rappel dudit loquet en position active.

7. Siège selon l'une quelconque des revendications 1 à 6, **caractérisé en ce que** l'extrémité de la biellette (22) articulée sur le plancher (10) est équipée d'un organe élastique (60) de rappel de cette biellette (22) en position d'utilisation de l'assise (2) et du dossier (5).

## Claims

1. Seat of an automobile vehicle, and more particularly a rear seat, of the type comprising a seat pan (2) and a backrest (5) mounted so as to be displaceable simultaneously by tilting means on the floor (10) of the vehicle between a position of use and a retracted position and each formed by a rigid frame (3; 6) and an upholstery (4; 7), the tilting means comprising:
- at the front of the frame (3) of the seat pan (2) a first rotation axis (20) perpendicular to the longitudinal direction of the vehicle and articulated on an end of at least one connecting rod (22), the other end of which is articulated on the floor (10),
- at the rear of the frame (3) of the seat pan (2) and at the upper part of this seat pan (2), a second rotation axis (30) perpendicular to the longitudinal direction of the vehicle and articulated on the frame (6) of the backrest (5),
**characterized in that** the tilting means also comprise
at the lower part of the frame (6) of the backrest (5) and beneath the said seat pan (2), a third rotation axis (40) perpendicular to the longitudinal direction of the vehicle and displaceable longitudinally towards the rear in at least one slide (50) so that the seat pan (2) descends towards the floor (10) by pivoting about the rotation axes (20) (30), and that the connecting rods (22) pivot about their end articulated on the said floor (10) of the said automobile vehicle, in the retracted position, the seat pan (2) is placed horizontally in the housing (11) arranged beneath the floor (10) and the said backrest (5) being placed horizontally above the said seat pan (2) to form a part of the said floor (10).

2. Seat according to Claim 1, **characterized in that** it comprises means (55, 58) for locking the frame (6) of the backrest (5) in the position of use of the seat pan (2) and of the backrest (5).

3. Seat according to any one of Claims 1 to 2, **characterized in that** the frame (3) of the seat pan (2) comprises, at its front part, a stop (24) against the said connecting rod (22) and, at its rear part, a stop (25) against the frame (6) of the backrest (5) in the position of use of the seat pan (2) and of the backrest (5).

4. Seat according to any one of Claims 1 to 3, **characterized in that** the first rotation axis (20) and the stops (24, 25) are each formed by a horizontal rod extending transversely between two flanges (3a, 3b) parallel to the longitudinal direction of the vehicle and forming the frame (3) of the said seat pan (2).

5. Seat according to Claim 2, **characterized in that** the locking means are formed by at least one latch (55, 58) mounted pivotally on the said slide (50) between an active blocking position of the third rotation axis (40) and a retracted freeing position of this third rotation axis (40).

6. Seat according to Claim 5, **characterized in that** the latch (55, 58) is equipped with an elastic return member (59) of the said latch in active position.

7. Seat according to any one of Claims 1 to 6, **characterized in that** the end of the connecting rod (22) articulated on the floor (10) is equipped with an elastic return member (60) of this connecting rod (22) in the position of use of the seat pan (22) and of the backrest (5).

## Patentansprüche

1. Kraftfahrzeugsitz und insbesondere Rücksitz, des Typs, der eine Sitzfläche (2) und eine Rückenlehne (5) aufweist, die durch Kippmittel auf dem Fußboden (10) des Kraftfahrzeugs zwischen einer Gebrauchsposition und einer eingefahrenen Position gleichzeitig beweglich montiert sind und jeweils aus einer starren Bewehrung (3; 6) und einem Futter (4; 7) bestehen, wobei die Kippmittel Folgendes aufweisen:
- auf der Vorderseite der Bewehrung (3) der Sitzfläche (2) eine erste Rotationsachse (20) senkrecht zu der Längsrichtung des Fahrzeugs und auf einem Ende mindestens eines Schwingarms (22), dessen anderes Ende auf dem Fußboden (10) angelenkt ist, angelenkt,
- auf der Rückseite der Bewehrung (3) der Sitzfläche (2) und im oberen Teil dieser Sitzfläche (2) eine zweite Rotationsachse (30) senkrecht zu der Längsrichtung des Fahrzeugs und auf der Bewehrung (6) der Rückenlehne (5) angelenkt,
**dadurch gekennzeichnet, dass** die Kippmittel auch Folgendes aufweisen:
im unteren Teil der Bewehrung (6) der Rückenlehne (5) und unterhalb der Sitzfläche (2), eine dritte Rotationsachse (40) senkrecht zu der Längsrichtung des Fahrzeugs und längs zur Rückseite in mindestens einer Gleitführung (50) derart verschiebbar, dass sich die Sitzfläche (2) zu dem Fußboden (10) unter Schwenken um Rotationsachsen (20) (30) senkt, und dass die Schwingarme (22) um ihr auf dem Fußboden (10) des Fahrzeugs angelenktes Ende in die eingefahrene Position schwenken, wobei die Sitzfläche (2) horizontal in der Aufnahme (11) platziert ist, die unterhalb des Fußbodens (10) eingerichtet ist, und die Rückenlehne (5) horizontal oberhalb der Sitzfläche (2) platziert ist, um einen Teil des Fußbodens (10) zu bilden.

2. Sitz nach Anspruch 1, **dadurch gekennzeichnet, dass** er Mittel (55, 58) zum Verriegeln der Bewehrung (6) der Rückenlehne (5) in der Gebrauchsposition der Sitzfläche (2) und der Rückenlehne (5) aufweist.

3. Sitz nach einem der Ansprüche 1 bis 2, **dadurch gekennzeichnet, dass** die Bewehrung (3) der Sitzfläche (2) in ihrem vorderen Teil einen Anschlag (24) gegen den Schwingarm (22) aufweist, und, in ihrem hinteren Teil, einen Anschlag (25) gegen die Bewehrung (6) der Rückenlehne (5) in der Gebrauchsposition der Sitzfläche (2) und der Rückenlehne (5).

4. Sitz nach einem der Ansprüche 1 bis 3, **dadurch gekennzeichnet, dass** die erste Rotationsachse (20) und die Anschläge (24, 25) jeweils aus einem horizontalen Schaft gebildet sind, der sich quer zwischen zwei Flanschen (3a, 3b), die zu der Längsrichtung des Fahrzeugs parallel sind und die Bewehrung (3) der Sitzfläche (2) bilden, erstreckt.

5. Sitz nach Anspruch 2, **dadurch gekennzeichnet, dass** die Verriegelungsmittel aus mindestens einer Klinke (55, 58) gebildet sind, die auf der Gleitführung (50) zwischen einer aktiven Blockierposition der dritten Rotationsachse (40) und einer eingefahrenen Freigabeposition dieser dritten Rotationsachse (40) schwenkend montiert ist.

6. Sitz nach Anspruch 5, **dadurch gekennzeichnet, dass** die Klinke (55, 58) mit einem elastischen Rückholorgan (59) der Raste in aktive Position ausgerüstet ist.

7. Sitz nach einem der Ansprüche 1 bis 6, **dadurch gekennzeichnet, dass** das Ende des Schwingarms (22), das auf dem Fußboden (10) angelenkt ist, mit einem elastischen Rückholorgan (60) dieses Schwingarms (22) in Gebrauchsposition der Sitzfläche (2) und der Rückenlehne (5) ausgerüstet ist.
